# EUROPÄISCHE PATENTSCHRIFT

(11) **EP 0 904 240 B1**
(45) Veröffentlichungstag und Bekanntmachung des Hinweises auf die Patenterteilung: **19.01.2000**
(21) Anmeldenummer: 97921814.6
(22) Anmeldetag: 28.04.1997
(51) Int. Cl.: B65D 90/46

(54) **BEHÄLTERINLINER**
CONTAINER LINER
REVETEMENT INTERIEUR POUR RECIPIENT

(30) Priorität: 03.05.1996 DE 19617902
(43) Veröffentlichungstag der Anmeldung: 31.03.1999
(73) Patentinhaber: Empac Verpackungs GmbH, 48282 Emsdetten (DE)
(72) Erfinder: TREPTE, Peter, D-48282 Emsdetten (DE); LÜTTGENS, Günter, D-51519 Odenthal (DE)
(74) Vertreter: Pott, Ulrich
(86) Internationale Anmeldenummer: EP9702189
(87) Internationale Veröffentlichungsnummer: WO9742103

(56) Entgegenhaltungen:
- EP-A- 0 699 599
- DE-A- 4 309 832

## Beschreibung

Die Erfindung bezieht sich auf einen Behälterinliner zum Einsatz in elektrostatisch ableitfahige Behälter nach dem Oberbegriff des Anspruchs 1 bzw. dem Oberbegriff des Anspruchs 12.

Flexible Schüttgutbehälter kommen zum Verpacken, zum Transport, zum Umschlag und zur Bevorratung unterschiedlicher Schüttgutmaterialien von jeweils 500 bis 2000 kg zum Einsatz und werden aber auch in Bereichen eingesetzt, wo Explosionsgefahren bestehen. Diese Explosionsgefahren können sich u. a. beim Befüllen eines Schüttgutbehälters (FIBC) mit staubexplosionsfähigen Füllgütern ergeben. Beim Entleeren des FIBC können darüber hinaus neben einer Staubexplosionsgefahr durch das Füllgut selbst auch noch Dampf- und Gasexplosionsgefahren auftreten, wenn die Entleerung z. B. in einen Behälter hinein erfolgt, in den bereits eine brennbare Flüssigkeit vorgelegt wurde. In allen Einsatzbereichen, in denen Explosionsgefahr durch brennbare Gase, Dämpfe oder Stäube besteht, müssen zur Vermeidung von Zündgefahren infolge elektrostatischer Aufladungen Schüttgutbehälter eingesetzt werden, die innen und außen elektrostatisch ableitfähig und geerdet sind.

Bei der Gestaltung von elektrostatisch ableitfähigen Schüttgutbehältern ist daher zu berücksichtigen, daß sowohl Risiken einer Büschelentladung bei Gasen und Dämpfen mit niedriger Mindestzündenergie als auch Risiken einer insbesondere auf Ladungsdoppelschichten zurückzuführenden Gleitstielbüschelentladung berücksichtigt sind. Gleichfalls muß jedoch auch sichergestellt sein, daß der Schüttgutbehälter Festigkeitseigenschaften aufweist, die eine Bevorratung von Schüttgütern bis 2 t gewährleisten und eine ausreichende Dichtigkeit vorliegt gegen den Austritt von Stäuben durch das Gewebe.

Üblicherweise werden flexible Schüttgutbehälter aus flexiblen Polypropylenbändchen hergestellt. Durch Einweben von elektrisch leitfähigen Bändchen in Kette und Schußrichtung wird das Behältergrundgewebe in elektrostatisch getrennte Flächenelemente ≤ 10⁴ mm² eingeteilt, so daß von den aufgeladenen Isolierstoffoberflächen keine zündfähigen Büschelentladungen ausgehen können.

Da flexible Schüttgutbehälter aus Gewebebändchen von Hause aus nicht dicht gegen Staubdurchtritt sind, werden sie auf der Behälterinnenseite mit einer Beschichtung vorzugsweise aus Polypropylen versehen.

Für bestimmte hochwertige chemische Erzeugnisse und empfindliche Lebensmittel ist es zudem notwendig, eine Barriereschicht mit geringer Durchlässigkeit für Wasserdampf, Stickstoff, Sauerstoff, Kohlendioxid oder im Lebensmittel enthaltene Aromen bereitzustellen. Eine solche Barriereschicht kann in Gestalt eines Behälterinliners ausgeführt sein, der in den flexiblen Transportbehältern als Innenbehälter eingelassen ist, dadurch selber vergleichsweise geringe Festigkeitseigenschaften aufweisen darf, jedoch im Zusammenwirken mit dem äußeren Transportbehälter die genannten Anforderungen zur Verhinderung von elektrostatischen Aufladungen erfüllen muß.

Hierzu gibt es Schutzklassen, die die Behälter erfüllen müssen und die beispielsweise bei der Berufsgenossenschaft der chemischen Industrie nachgelesen werden können. Behälter, die der Schutzklasse B (nur Staubexplosionsgefahr) zuzuordnen sind, dürfen ein aufladbares Behältermaterial enthalten, jedoch dürfen keine Gleitstielbüschelentladungen entstehen. Diese werden sicher vermieden, wenn die elektrische Durchschlagspannung, gemessen über die gesamte Wandstruktur (Behälter mit/oder ohne Innensack), 4 kV nicht überschreitet.

Behälter der Schutzklasse C (Explosionsgefahr zusätzlich durch Gase und Dämpfe) müssen elektrostatisch ableitfähig sein, d. h., daß an jeder Stelle der Innen- und Außenseite des Behälters (einschließlich Kaschierung und/oder Innensack) der Ableitwiderstand weniger als 10⁸ Ω betragen und der Behälter geerdet sein muß.

Um diese Anforderungen hinsichtlich der Dichtigkeit eines solchen Behälters einerseits und hinsichtlich der elektrostatischen Ableitfähigkeit des Wandungsmaterials andererseits zu erfüllen, wurde vorgeschlagen (DE 43 09 832 A1), eine sich auf einer leitfähigen Unterlage befindende, elektrisch isolierende Schicht zu perforieren. Dadurch wird die Isolierung der leitfähigen Unterlage punktuell durchbrochen und die Gefahr von zündfähigen Entladungen verhindert (Schutzklasse C). Diese Perforierung wird über einen elektrischen Durchschlag erzeugt.

Solch beschichtetes elektrostatisch ableitfähiges Wandungsmaterial eines Behälters, der ohne einen inneren, geringere mechanische Festigkeit aufweisenden Beutel, einen sogenannten Inliner, auskommt, hat für bestimmte chemische Erzeugnisse und Lebensmittel keine ausreichenden Barriereeigenschaften. Zudem ist es nötig, die Wandungen solcher Behälter mit Hilfe von Nähmaschinen zu konfektionieren. Nahteinstichlöcher vermindern die Dichtigkeit erheblich und erlauben das Endringen von Wasser bei Außenlagerung. Ein weiteres Problem ist, daß durch den Arbeitsgang der Konfektionierung eine ausreichende Sauberkeit für pharmazeutische Produkte nicht erreicht werden kann.

Die EP 0 699 599 Al zeigt ebenfalls ein mehrschichtiges Wandungsmaterial, beispielsweise auch eines Behälterinliners, bei dem zumindest eine Schicht durchgehend perforiert ist und sich an diese eine elektrisch leitfähige Schicht sowie eine Außenschicht mit Sperreigenschaften anschließt. Die perforierte Schicht trägt zur Schaffung von Barriereeigenschaften nicht bei. Ein derartiger Verbund muß daher eine recht hohe Dicke haben, in den Perforationen steht die elektrisch leitende Folie in direktem Kontakt mit dem Schüttgut.

Um ausreichende Barriereeigenschaften zu erfüllen und um eine Außenlagerung und/oder ausreichende Sauberkeit zu erreichen bei elektrostatisch ableitfähigen Behältern, werden auch heute schon Inliner eingesetzt, die jedoch die Anforderungen der oben genannten Klassen B und C nicht erfüllen bzw. sehr unsicher erfüllen, wie Inliner mit antistatischen Wirkstoffkonzentraten (z. B. ethoxiliertes Akylamin). Die antistatische Wirkung wird dadurch erreicht, daß die Wirkstoffe an die Oberfläche des Inliners migrieren und Feuchtigkeit binden. Es wird ein Oberflächenwiderstand erreicht von 10⁹ Ω bis 10¹¹ Ω. Die Wirkung ist abhängig von der relativen Feuchte der Luft in der Umgebung des Inliners. Die physiologische Unbedenklichkeit ist nicht gegeben. Die Wirkung ist zeitlich begrenzt (maximal 18 Monate).

Es werden auf dem Markt auch polymere Monofolien als Inliner eingesetzt, in die Leitruß-Compounds eingearbeitet sind. Leitruß-Compounds sind sehr teuer. Darüber hinaus haben sie den Nachteil, daß sie als kanzerogen eingestuft werden. Außerdem haben sie den Nachteil, daß die Siegelnahtfestigkeiten dieser Folien sehr gering sind. Wegen dieser Nachteile wird die Folie auch in koextrudierter Ausführung angeboten, in der Regel mit einer ca. 75 µm starken Schicht mit Leitruß-Compounds (leitfähig) und 25 µm starken Schicht ohne Leitruß-Compounds. Die 25 µm starke Schicht soll das Füllgut schützen vor den negativen Eigenschaften der Leitruß-Compounds. Auf der anderen Seite soll erreicht werden, daß die Schicht mit 25 µm gewährleistet, daß die Durchschlagspannung 4 kV nicht überschreitet. Aufgrund des Standes der Technik ist es nicht möglich, die Schichtdicke von 25 µm weiter zu reduzieren, um eine Durchschlagspannung zu erreichen, die deutlich unter 4 kV liegt. Es muß auch damit gerechnet werden, daß die Schichtdicke nicht gleichmäßig ist und somit teilweise die gewünschte Durchschlagspannung überschritten wird. Zudem kann ein solches Wandungsmaterial nicht die für bestimmte chemische Erzeugnisse und Lebensmittel erforderlichen oben angesprochenen Barriereeigenschaften erfüllen.

Der vorliegenden Erfindung liegt das Problem zugrunde, einen Behälterinliner zum Einsatz in elektrostatisch ableitfahige Behälter so auszugestalten, daß einerseits die Anforderungen zur Nichtaufladbarkeit des FIBC erfüllt sind und andererseits der Behälterinliner sehr gute Barriereeigenschaften hinsichtlich der Abdichtung gegen den Durchtritt von Gasen aufweist.

Die Erfindung löst dieses Problem mit den Merkmalen des Anspruches 1 bzw. des Anspruches 12.

Durch die Mikroausnehmungen, die die Schicht nicht vollständig perforieren, wird erreicht, daß einerseits die Dichtigkeit der mit den Mikroausnehmungen versehenen Schicht gewahrt bleibt und andererseits die Durchschlagspannung gering gehalten wird, so daß zuverlässig eine gefährlich hohe Aufladung des Schichtmaterials vermieden wird.

Auch mit den Mikroausstülpungen nach Anspruch 12 bleibt die Dichtigkeit der mit den Ausstülpungen versehenen Schicht gewahrt, andererseits ist durch die Materialverdünnung im Bereich der Mikroausnehmungen die Durchschlagspannung zuverlässig auf Werte kleiner 4 kV herabgesetzt.

Je nach Ausführung des erfindungsgemäßen Behälterinliners können dabei die verschiedenen Schutzklassen erfüllt werden. Die Schutzklasse B kann dabei durch eine einzelne LDPE-Folie, die als Inliner für einen flexiblen Schüttgutbehälter eingesetzt wird, erfüllt werden.

Die Schutzklasse C läßt sich erfüllen, wenn, wie in weiteren Ansprüchen beschrieben, der Behälterinliner mehrlagig ausgebildet ist und zumindest eine elektrisch leitfähige Schicht umfaßt.

Weitere Vorteile ergeben sich aus der Zeichnung und der nachfolgenden Beschreibung mehrerer Ausführungsbeispiele. In der Zeichnung zeigen:
- Fig. 1: einen schematischen Querschnitt durch eine einlagige Inlinerwandung,
- Fig. 2: eine ähnliche Ansicht einer zweilagigen Inlinerwandung,
- Fig. 3: eine ähnliche Ansicht zu Fig. 1 einer mit Mikroausstülpungen versehenen einlagigen Inlinerwandung,
- Fig. 4: eine Detailvergrößerung aus Fig. 3.

Ein erfindungsgemäßer Behälterinliner ist zum Einsatz in elektrostatisch ableitfähige Behälter vorgesehen und weist zumindest eine isolierende Schicht 2;2';2" auf, weitere Schichten können enthalten sein, etwa in Gestalt der leitfähigen Schichten 3', die auch beiderseits beschichtet sein kann. In jedem Falle sind in einer Schicht sich nur über einen Teilbereich ihrer Dicke erstreckende Mikroausnehmungen 7;7' oder Mikroausstülpungen 7'' angeordnet. Auch im Falle von mit Mikroausnehmungen 7;7' versehenen Schichten 2,3' ist möglich, daß weitere Schichten 2' eine vollständige Mikroperforation 8' aufweisen, also über ihre gesamte Schichtdicke von Öffnungen durchsetzt sind.

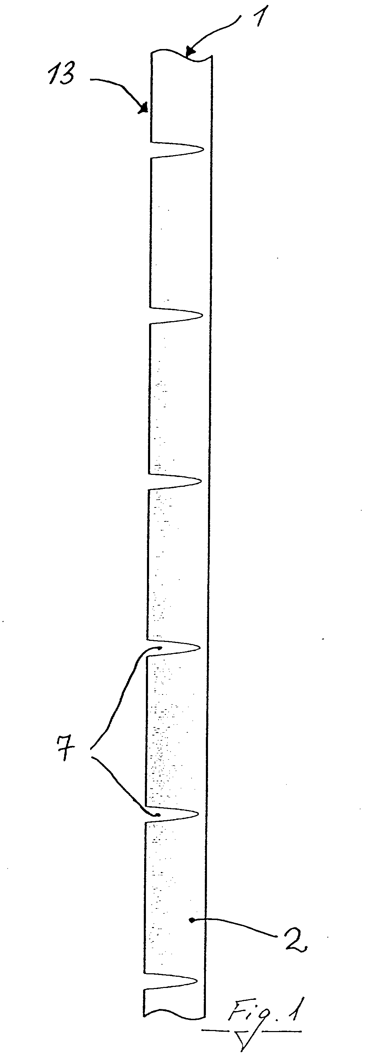

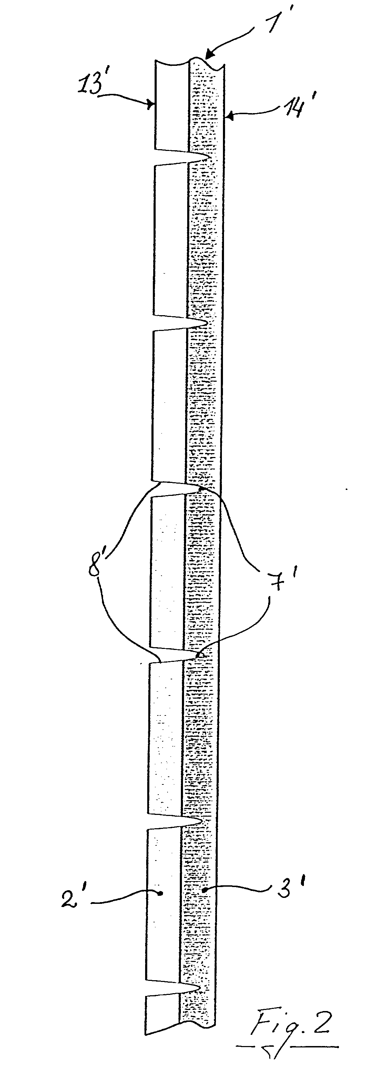

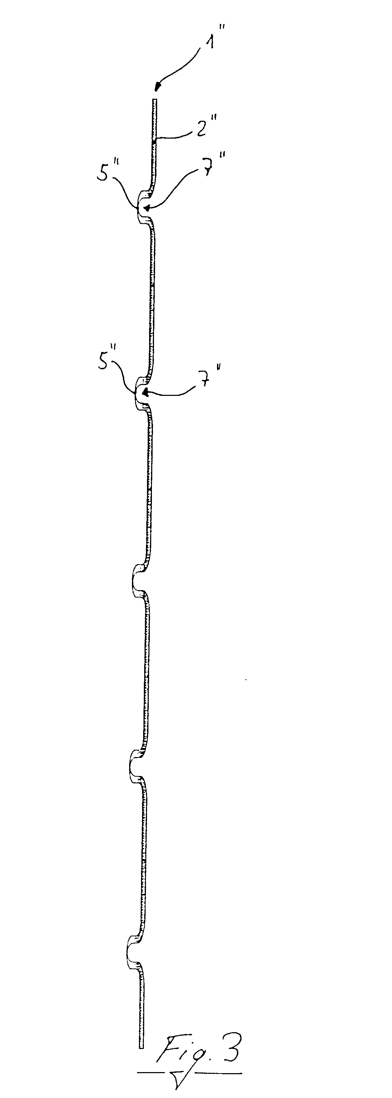

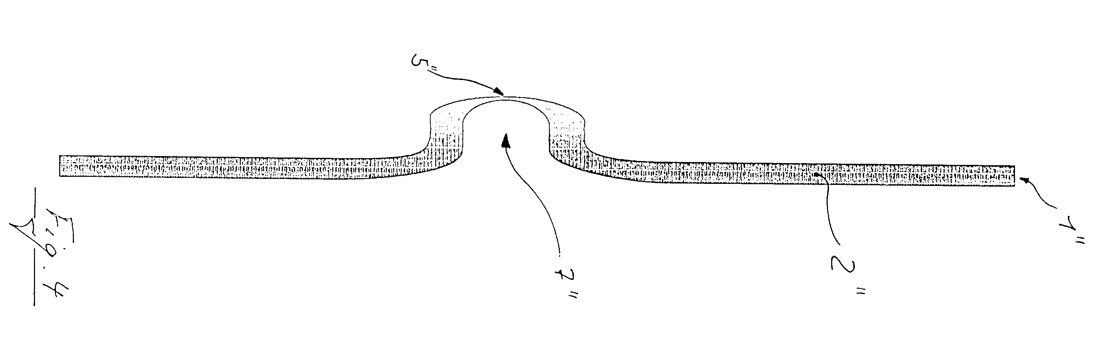

Weitere als die in den Fig. 1 bis 4 gezeigten Anordnungen von Schichten sind möglich. Die Dicke der Inlinerwandung 1;1';1" beträgt etwa zwischen 60 und 300 µm, um eine noch hinreichende mechanische Festigkeit zu erhalten.

Die Einprägung der Mikroausnehmungen 7;7' und auch der Mikroperforation 8' erfolgt durch eine Anordnung von drehbaren Walzen, die über ihren Umfang verteilte Dorne aufweisen, mit denen sie in die Inlinerwandung 1;1' eingreifen und dadurch die Mikroausnehmungen 7;7' bzw. die Mikroperforation 8;8' bewirken. Dazu ist ein Widerlager erforderlich, so daß der Druck, mit dem die Dorne in die Inlinerwandung 1;1' eindrücken, variabel ist. Die Dorne sind in der Walze radial verstellbar angeordnet, so daß die Länge ihres freien und aus der Walze herausragenden Bereiches einstellbar ist und somit die Tiefe des Eindringens in den Schichtwerkstoff den Anforderungen angepaßt werden kann.

Die elektrisch isolierenden Schichten 2;2';2" sind siegelfähig, d. h., sie können verschweißt oder verklebt werden - etwa zur Anmontage eines Einfüllstutzens an den Inliner.

Im folgenden sind drei Ausführungsbeispiele einer Inlinerwandung 1;1';1" beschrieben:

### Beispiel 1:

Die Inlinerwandung 1 umfaßt nur eine Lage, die vorzugsweise aus Low-Density-Polyethylen (LDPE) besteht und etwa 100 µm dick ist. Im Bereich der Mikroausnehmungen 7 beträgt die Schichtdicke - je nach Material - nur etwa 5 bis 20 µm, um sicherzustellen, daß die Durchschlagspannung 4 kV nicht überschreitet.

Da die Mikroausnehmungen 7 die Folie 2 nicht vollständig durchsetzen, ist die Dichtigkeit dieser Inlinerwandung 1 gewährleistet, und sie kann verklebt oder verschweißt werden, um somit eine völlig dichte Innenauskleidung eines flexiblen Schüttgutbehälters darzustellen. Dies ist insbesondere im Bereich der genähten Kanten des üblicherweise aus Gewebematerial gefertigten Schüttgutbehälters notwendig, da sich hier durch die Nadelstiche Poren ergeben, durch die sowohl Staub aus dem Schüttgutbehälter ausdringen kann als auch eine Gasdichtigkeit nicht gegeben ist. Hier schafft ein solcher Inliner Abhilfe.

Durch die Mikroausnehmungen 7 ist gewährleistet, daß die Durchschlagspannung des gesamten Wandmaterials des Schüttgutbehälters, dessen innere Lage von dem hier vorliegenden Inliner gebildet ist, eine Durchschlagspannung von weniger als 4 kV aufweist, so daß die Wandung des Schüttgutbehälters die Anforderungen der Schutzklasse B erfüllt. Gleichwohl ist es nicht vollständig zu vermeiden, daß es zwischen den Mikroausnehmungen 7 zu Aufladungserscheinungen an der Polyethylen-Folie kommt. Die Schutzklasse C kann auf diese Weise nicht erfüllt werden. Hier schafft die in Beispiel 2 dargestellte Inlinerwandung 1' Abhilfe.

### Beispiel 2:

Die Inlinerwandung 1' ist zweilagig ausgebildet und umfaßt eine elektrisch isolierende Schicht 2' und eine elektrisch leitende Schicht 3'. Die Gesamtdicke der Inlinerwandung 1' liegt bei etwa 100 µm, von denen etwa 30 % auf die elektrisch isolierende Schicht 2' entfallen.

Durch die elektrisch leitfähige Schicht 3' ist gewährleistet, daß Aufladungen der Inlinerwandung 1' vermieden werden und ein Ableitwiderstand gegenüber der Erde von < 10⁸ Ω erreicht wird, so daß die Schutzklasse C erfüllt ist.

Die elektrisch isolierende Schicht 2' ist von einer Mikroperforation 8' vollständig durchsetzt, so daß die eigentlich dichtende Funktion von der elektrisch leitfähigen Schicht 3' übernommen wird. Diese weist Mikroausnehmungen 7' auf, so daß auch hier die Durchschlagspannung gegenüber einer weiteren äußeren Lage des flexiblen Schüttgutbehälters verringert ist. Die elektrisch leitfähige Schicht 3' besteht dabei vorzugsweise aus einer Polymermatrix, in die elektrisch leitende Additive, insbesondere als Rußpartikel, eingelassen sind.

Eine solche Inlinerwandung 1' wird vorzugsweise durch Koextrusion der beiden Folienanteile hergestellt.

Es ist aber auch möglich, als leitfähige Schicht 3' eine metallische Folie, etwa eine Aluminiumfolie, einzusetzen, die mit elektrisch isolierenden Schichten beidseitig beschichtet sein kann, so daß sich insgesamt ein zumindest dreilagiger - oder mehrlagiger-Verbund ergibt. Auch hier können einige äußere Lagen wieder eine Mikroperforation 8,8' aufweisen, also vollständig durchsetzt sein, weiter innenliegende Lagen sind hingegen erfindungsgemäß nur mit Mikroausnehmungen 7,7' versehen, um die Dichtigkeit der Inlinerwandung 1,1' zu wahren. Die Lagen des Verbundes sind durch bekannte Herstellungsverfahren miteinander verbindbar.

### Beispiel 3:

Analog zu Beispiel 1 umfaßt auch hier die Inlinerwandung 1'' nur eine Lage, die vorzugsweise aus Low-Density-Polyethylen (LDPE) besteht und etwa 100 µm dick ist. Im Unterschied zu den bisherigen Beispielen weist die Inlinerwandung 1'' hier jedoch keine Mikroausnehmungen 7 bzw. 7' auf, die sich über einen Teilbereich der Schichtdicke erstrecken, sondern Mikroaustülpungen 7", in deren Bereichen die Schicht Ausprägungen aus der Fläche aufweist und damit die Gesamtschichtdicke erhöht ist.

Gleichwohl ist auch hier im Bereich der Mikroausstülpungen 7'' eine Materialverdünnung in parallel zur Schicht orientierten Bereichen 5'' der Mikroausstülpungen 7'' erreicht. Durch diese Materialverdünnungen ist die Durchschlagspannung einer so gefertigten Inlinerwandung 1'' derart herabgesetzt, daß die Schutzklasse B erfüllt werden kann. Gleichwohl kann es auch hier zu Aufladungserscheinungen zwischen den Mikroausstülpungen 7'' kommen, so daß die Schutzklasse C von einer reinen Polyethylenfolie nicht erfüllt werden kann. Neben der Ausbildung einer einschichtigen Inlinerwandung 1'' - analog zu den Ansprüchen 3 bis 5 und zu Beispiel 1 - ist auch die Herstellung eines Schichtverbundes mit zumindest einer leitfähigen Schicht - ähnlich wie in Beispiel 2 beschrieben und in Analogie zu den Ansprüchen 6 bis 11 - auch bei einer solchen Inlinerwandung 1'' mit Mikroausstülpungen 7'' möglich.

Es versteht sich, daß die drei hier genannten Beispiele nur einen Ausschnitt aus dem Spektrum der Möglichkeiten darbieten, die durch die Erfindung gegeben sind. In jedem Fall werden Mikroausnehmungen 7;7' oder Mikroausstülpungen 7'' in geeignet geringem Abstand zueinander angeordnet, so daß einerseits die Durchschlagspannung hinreichend niedrig ist und sich zwischen den Mikroausnehmungen 7;7' bzw. Mikroausstülpungen 7'' keine gefährlichen Ladungen ansammeln können, andererseits aber eine Dichtigkeit der Inlinerwandung 1;1';1" gegenüber Stäuben und Gasen in jedem Falle gewährleistet ist, so daß mit einem so ausgestatteten Behälterinliner versehene flexible Schüttgutbehälter für den Transport von Herbiziden, Fungiziden oder auch Kaffee und Gewürzen geeignet sind, insbesondere an den Kantenbereichen und Anformbereichen - etwa eines Einfüllstutzens - ein Verkleben oder Verschweißen der Inlinerwandung 1;1';1'' ermöglicht ist und auf diese Weise keine die Inlinerwandung 1;1';1" vollständig durchsetzenden Öffnungen entstehen - weder durch ein Vernähen noch durch eine durchgehende Perforation.

## Patentansprüche

1. Flexibler Behälterinliner zum Einsatz in elektrostatisch ableitfähige Behälter mit zumindest einer Inlinerwandung (1;1') aus einem ein- oder mehrschichtigen Wandungsmaterial aus vorzugsweise Polymeren, z.B. einer LDPE Monofolie, einer koextrudierten Polymerfolie oder dgl., wobei die Inlinerwandung (1;1') eine elektrisch nicht leitfähige Schicht (2;2') aufweist, **dadurch gekennzeichnet**, daß zumindest eine Schicht (2,3') der Inlinerwandung (1,1') sich nur über einen Teilbereich ihrer Dicke erstreckende Mikroausnehmungen (7;7') aufweist.

2. Behälterinliner nach Anspruch 1, **dadurch gekennzeichnet**, daß sich die Mikroausnehmungen (7;7') über einen Bereich von 15 % - 95 % der Dicke der mit den Mikroausnehmungen versehenen Inlinerwandung erstrecken.

3. Behälterinliner nach Anspruch 1 oder 2, **dadurch gekennzeichnet,** daß die Inlinerwandung (1) einschichtig ausgebildet ist und aus einem elektrisch nicht leitfähigen Material besteht.

4. Behälterinliner nach Anspruch 3, **dadurch gekennzeichnet**, daß die Dicke der Inlinerwandung (1) außerhalb der Mikroausnehmungen zwischen 30 und 300 µm beträgt.

5. Behälterinliner nach den Ansprüchen 3 und 4, **dadurch gekennzeichnet**, daß die Inlinerwandung (1) durch Low-Density-Polyethylen-Folie gebildet ist.

6. Behälterinliner nach Anspruch 1, **dadurch gekennzeichnet**, daß die Inlinerwandung (1') zumindest eine elektrisch leitfähige Schicht (3') aufweist.

7. Behälterinliner nach Anspruch 6, **dadurch gekennzeichnet**, daß die elektrisch leitfähige Schicht (3') durch eine mit Additiven versehene Polymerfolie gebildet ist.

8. Behälterinliner nach Anspruch 6, **dadurch gekennzeichnet**, daß die elektrisch leitfähige Schicht (3') durch eine metallische Folie gebildet ist.

9. Behälterinliner nach Anspruch 8, **dadurch gekennzeichnet,** daß die die elektrisch leitfähige Schicht (3') bildende metallische Folie beiderseits beschichtet ist.

10. Behälterinliner nach einem der Ansprüche 6 bis 9, **dadurch gekennzeichnet**, daß die Inlinerwandung durch im Koextrusionsverfahren hergestellte Schichten (2',3') gebildet ist.

11. Behälterinliner nach einem der Ansprüche 6 bis 9, **dadurch gekennzeichnet**, daß mehrere Schichten (2',3') miteinander verklebt sind.

12. Flexibler Behälterinliner zum Einsatz in elektrostatisch ableitfahige Behälter mit zumindest einer Inlinerwandung (1") aus einem ein- oder mehrschichtigen Wandungsmaterial aus vorzugsweise Polymeren, z.B. einer LDPE Monofolie, einer koextrudierten Polymerfolie oder dgl., wobei die Inlinerwandung (1") eine elektrisch nicht leitfähige Schicht aufweist, **dadurch gekennzeichnet,** daß zumindest in einer Schicht (2'') der Inlinerwandung (1'') Mikroausstülpungen (7") angeordnet sind, die in ihren parallel zur Schicht (2'') liegenden vorderen Bereichen (5'') Materialverdünnungen aufweisen.

## Claims

1. A flexible container liner for use in electrostatically leakable containers with at least one liner wall (1;1') consisting of a single or multi-layer wall material of preferably polymeric materials, for example an LDPE monofilm, a co-extruded polymer film or the like, whereby the liner wall (1;1') comprises an electrically non-conductive layer (2;2'), characterised in that at least one layer (2;3') of the liner wall (1;1') comprises microscopic recesses (7;7') which extend only over a portion of its thickness.

2. A container liner according to Claim 1, characterised in that the microscopic recesses (7;7') extend over an area of 15% - 95% of the thickness of the liner wall which is provided with the microscopic recesses.

3. A container liner according to Claim 1 or 2, characterised in that the liner wall (1) is of single-layer construction and consists of a material which is of an electrically non-conductive material.

4. A container liner according to Claim 3, characterised in that the thickness of the liner wall (1) outside the microscopic recesses amounts to between 30 and 300 µm.

5. A container liner according to Claims 3 and 4, characterised in that the liner wall (1) is formed by a low-density polyethylene film.

6. A container liner according to Claim 1, characterised in that the liner wall (1') comprises at least one electrically conductive layer (3').

7. A container liner according to Claim 6, characterised in that the electrically conductive layer (3') is formed by a polymer film comprising additives.

8. A container liner according to Claim 6, characterised in that the electrically conductive layer (3') is formed by a metallic film.

9. A container liner according to Claim 8, characterised in that the metallic film constituting the electrically conductive layer (3') is coated on both sides.

10. A container liner according to one of Claims 6 to 9, characterised in that the liner wall is formed by layers (2',3') produced by a co-extrusion process.

11. A container liner according to one of Claims 6 to 9, characterised in that a plurality of layers (2',3') are glued to one another.

12. A flexible container liner for use in electrostatically leakable containers and having at least one liner wall (1") consisting of a single- or multi-layer wall material of preferably polymeric material, e.g. an LDPE monofilm, a co-extruded polymer film or the like, the inner wall (1") comprising an electrically non-conductive layer, characterised in that there are in at least one layer (2") of the liner wall (1") microscopic protuberances (7") which comprise areas of thinner material in their front portions (5") disposed parallel with the layer (2").

## Revendications

1. Revêtement intérieur de récipient flexible pour un usage dans des récipients à capacité de décharge des charges électrostatiques ayant au moins une paroi de revêtement interne (1;1') constituée d'un matériau de paroi à une ou plusieurs couches de préférence de polymères, par exemple une feuille unique de LDPE, une feuille de polymère co-extrudée ou analogue, la paroi de revêtement intérieur (1;1') présentant une couche non conductrice de l'électricité (2;2'), caractérisé en ce qu'au moins une couche (2,3') de la paroi de revêtement intérieur (1, 1') présente des microcavités (7;7') qui ne s'étendent que sur une partie de son épaisseur.

2. Revêtement intérieur de récipient selon la revendication 1, caractérisé en ce que les microcavités (7;7') s'étendent sur une zone de 15%-95% de l'épaisseur de la paroi de revêtement intérieur pourvue des microcavités.

3. Revêtement intérieur de récipient selon la revendication 1 ou 2, caractérisé en ce que la paroi de revêtement intérieur (1) présente une seule couche et est constituée d'un matériau non conducteur de l'électricité.

4. Revêtement intérieur de récipient selon la revendication 3, caractérisé en ce que l'épaisseur de la paroi de revêtement intérieur (1) en dehors des microcavités est comprise entre 30 et 300 µm.

5. Revêtement intérieur de récipient selon les revendications 3 et 4, caractérisé en ce que la paroi de revêtement intérieur (1) est formée d'une feuille de polyéthylène de basse densité.

6. Revêtement intérieur de récipient selon la revendication 1, caractérisé en ce que la paroi de revêtement intérieur (1') présente au moins une couche conductrice de l'électricité (3').

7. Revêtement intérieur de récipient selon la revendication 6, caractérisé en ce que la couche conductrice de l'électricité (3') est formée d'une feuille de polymère contenant des additifs.

8. Revêtement intérieur de récipient selon la revendication 6, caractérisé en ce que la couche conductrice de l'électricité (3') est formée d'une feuille métallique.

9. Revêtement intérieur de récipient selon la revendication 8, caractérisé en ce que la feuille métallique formant la couche conductrice de l'électricité (3') est revêtue sur les deux faces.

10. Revêtement intérieur de récipient selon l'une quelconque des revendications 6 à 9, caractérisé en ce que la paroi de revêtement intérieur est formée de couches (2',3') fabriquées selon un procédé de co-extrusion.

11. Revêtement intérieur de récipient selon l'une quelconque des revendications 6 à 9, caractérisé en ce que plusieurs couches (2',3') sont collées l'une à l'autre.

12. Revêtement intérieur de récipient flexible pour un usage dans des récipients à capacité de décharge des charges électrostatiques ayant au moins une paroi de revêtement intérieur (1") constituée d'un matériau de paroi à une ou plusieurs couches de préférence de polymères, par exemple une feuille unique de LDPE, une feuille de polymère co-extrudée ou analogue, la paroi de revêtement intérieur (1") présentant une couche non conductrice de l'électricité, caractérisé en ce que, au moins dans une couche (2") de la paroi de revêtement intérieur (1") sont agencées des microprotubérances (7") qui présentent des amincissements de matériau dans leurs zones avant (5") parallèles à la couche (2").
